# EUROPEAN PATENT SPECIFICATION

(11) **EP 4 180 743 B1**
(45) Date of publication and mention of the grant of the patent: **03.06.2026**
(21) Application number: 21792267.3
(22) Date of filing: 06.04.2021
(51) Int. Cl.: F25C 1/10, A23G 9/30

(54) **CONTROL METHOD, AUTOMATIC ICE MAKER, AND REFRIGERATOR**
STEUERUNGSVERFAHREN, AUTOMATISCHER EISBEREITER UND KÜHLSCHRANK
PROCÉDÉ DE COMMANDE, MACHINE À GLAÇONS AUTOMATIQUE ET RÉFRIGÉRATEUR

(30) Priority: 09.07.2020 CN 202010658146
(43) Date of publication of application: 17.05.2023
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: DU, Qihai, Qingdao, Shandong 266101 (CN); ZHANG, Yanqing, Qingdao, Shandong 266101 (CN); ZHAO, Zhenyu, Qingdao, Shandong 266101 (CN); MOU, Guoliang, Qingdao, Shandong 266101 (CN); ZUO, Lihua, Qingdao, Shandong 266101 (CN)
(74) Representative: Winter, Brandl - Partnerschaft mbB
(86) International application number: PCT/CN2021/085625
(87) International publication number: WO 2021/213179

(56) References cited:
- EP-A1- 0 683 365
- CN-A- 102 369 402
- CN-A- 105 980 796
- CN-A- 110 006 198
- CN-U- 203 605 570
- JP-A- H09 310 951
- KR-A- 20180 092 352
- US-A1- 2012 031 135
- US-B2- 8 443 619

## Description

### TECHNICAL FIELD

The present invention relates to the technical field of refrigeration, and specifically to a method of controlling an automatic ice maker, an automatic ice maker and a refrigerator.

### BACKGROUND

As smart refrigerators prevail, high-end smart refrigerators increasingly appeal to uses.

At present, many refrigerators have an ice-making function. An ice-making manner in the refrigerators evolves from a simple ice-making mold to a manual ice maker and then to an automatic ice maker. The automatic ice maker may automatically fill water to an ice-making box to make ice by being connected externally to tap water or by filling water into a built-in water box; as the amount of ice reduces, water is refilled automatically into the ice-making box to make ice, thereby achieving an automatic ice-making cycle. Therefore, it is unnecessary to require the user to fill water into the ice-making box when ice is made every time. However, while providing convenience to the user, the automatic ice maker is structurally more complicated with a control circuit and a sensor being internally provided. Meanwhile, when the ice maker is not used in a long period of time, the water filling pipe and the ice mold of the ice maker are exposed to the environment in the long period of time, contaminants such as dust remain on the inner wall of the pipe, and the user cannot clean them.

EP0683365A1 relates to a method and apparatus for controlling an ice making machine by monitoring water level in a sump used for water recirculation over an evaporator plate. Self-diagnostic means are also provided for automatic shutdown upon detection of malfunction during various cycles.

JPH09310951A relates to an ice machine for continuous ice production is equipped with a check start switch which is operated during the ice production operation and by which the ice production operation is stopped after a predetermined period of time.

US20120031135A1 relates to an apparatus for producing flake ice from a liquid is, and a process for cleaning an apparatus for producing flake ice.

### SUMMARY

An object of the present invention is to provide a method for controlling an automatic ice maker, which may avoid a problem that foreign matters in a water filling pipe and an ice-making box cannot be discharged because the automatic ice maker does not make ice in a long time period.

Two more objects of the present invention are to provide an automatic ice maker and a refrigerator containing the same, wherein the automatic ice maker makes ice by the above control method to overcome the problem that foreign matters in the water filling pipe and the ice-making box cannot be discharged.

The invention is defined by the appended set of claims.

As compared with the prior art, the present invention provides a control method adapted to control the ice making process of the automatic ice maker in the refrigerator. By calculating the time period in which the automatic ice maker stops ice making, the water is filled into the ice-making box at least once to make the first plurality of ice cubes (or non-clean ice cubes) at least once, and then the first plurality of ice cubes are discharged; then the water is filled into the ice-making box to make the second plurality of ice cubes (clean ice cubes); on the one hand, foreign matters such as dust existing in the water filling pipe and ice-making box due to no use of the automatic ice maker in a long time period are carried away by making non-clean ice cubes at least once; on the other hand, this ensures that the user can obtain clean ice cubes whenever removing ice cubes.

In addition, the present invention further provides an automatic ice maker and a refrigerator based on the above control method.

### BRIEF DESCRIPTION OF THE DRAWINGS

FIG. 1 is a flow chart of a method of controlling an automatic ice maker in an embodiment of the present invention.
FIG. 2 is a flow chart of step S2 of the controlling method of FIG. 1.
FIG. 3 is a block diagram of functional modules corresponding to the method for controlling the automatic ice maker according to an embodiment of the present invention.
FIG. 4 is a schematic view of a refrigerator in an embodiment of the present invention.

### DETAILED DESCRIPTION

The present invention will be described in detail below in combination with embodiments shown in the figures.

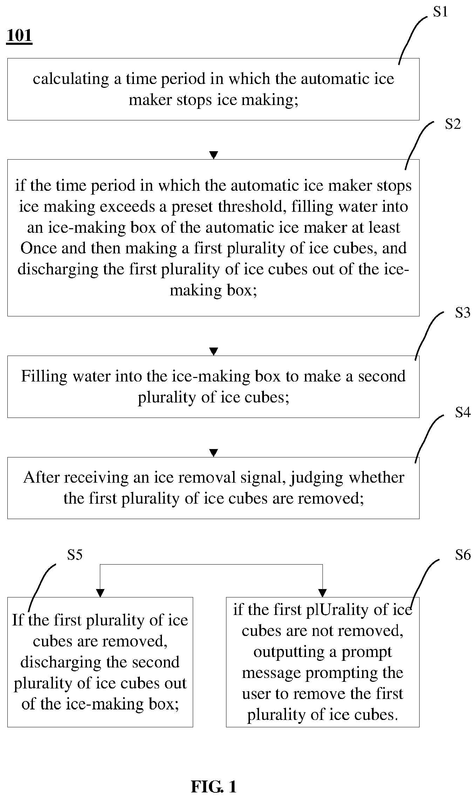

As shown in FIG. 1, a method 101 of controlling an automatic ice maker comprises:
Step S1: calculating a time period in which the automatic ice maker stops ice making;
Step S2: If the time period in which the automatic ice maker stops ice making exceeds a preset threshold, filling water into an ice-making box of the automatic ice maker at least once and then making a first plurality of ice cubes, and discharging the first plurality of ice cubes out of the ice-making box; and
Step S3: continuing to fill water into the ice-making box to make a second plurality of ice cubes.

In the present embodiment, the automatic ice maker is always in an ON operation state. In step S1, calculating a time period in which the automatic ice maker stops ice making means recording a time period in which the automatic ice maker stops ice making, starting from completion of a previous ice-making process.

In the present embodiment, in step S2, filling water into an ice-making box of the automatic ice maker at least once means, if a cleanness degree of the discharged first plurality of ice cubes is judged low, filling water into the ice-making box repeatedly multiple times to make the first plurality of ice cubes repeatedly multiple times before making a second plurality of ice cubes, until the cleanness degree of the first plurality of ice cubes meets a preset condition. The preset condition is for example that foreign matters visible by naked eyes are not included in the first ice cube.

It needs to be appreciated that in step S2 of the control method 101, on the one hand, in a case where the automatic ice maker does not make ice in a long time period, the foreign matters such as dust existing in the water filling pipe and ice-making box of the automatic ice maker are removed by periodically making the first plurality of ice cubes; on the other hand, in the case where the automatic ice maker does not make ice in a long time period, it may be ensured that the second plurality of ice cubes accessed by the user are clean ice cubes.

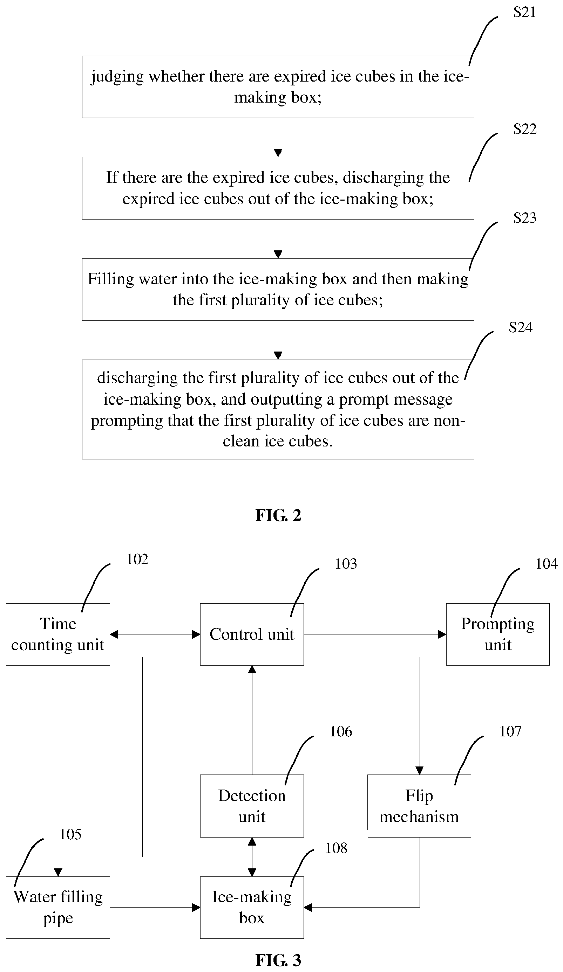

As shown in FIG. 2, step S2 further comprises:
Step S21: judging whether there are expired ice cubes in the ice-making box before filling water into the ice-making box;
Step S22: if there are the expired ice cubes, discharging the expired ice cubes out of the ice-making box;
Step S23: continuing to fill water into the ice-making box and then making the first plurality of ice cubes.

In addition, after step S23, the step S2 further comprises step S24: discharging the first plurality of ice cubes out of the ice-making box, and outputting a prompt message prompting that the first plurality of ice cubes are non-clean ice cubes.

As shown in FIG. 1, the controlling method 101 further comprises the following steps after step S3:
Step S4: after receiving an ice removal signal, judging whether the first plurality of ice cubes are removed;
Step S5: if the first plurality of ice cubes are removed, discharging the second plurality of ice cubes out of the ice-making box.

In the present embodiment, after step S4, the method further comprises:
Step S6: if the first plurality of ice cubes are not removed, outputting a prompt message prompting the user to remove the first plurality of ice cubes.

It needs to be appreciated that the ice removal signal received in step S4 refers to a signal indicating the user to open the automatic ice maker to remove the second plurality of ice cubes.

In step S24, a prompt message prompting that the first plurality of ice cubes are non-clean ice cubes is generally output in the form of a voice prompt and a text prompt to prompt the user to remove the first plurality of ice cubes out of the ice storage box. Since step S1 and step S2 in the control method 101 are performed periodically and automatically, there might be a case in which "the output prompt message prompting the first plurality of ice cubes are non-clean ice cubes" is not received and is missed by the user. In this case, when the user opens the automatic ice maker and wants to obtain clean ice cubes (the second plurality of ice cubes), if the second plurality of ice cubes are directly discharged out of the ice-making box whereas non-clean ice cubes (the first plurality of ice cubes) exist in the ice storage box, the second plurality of ice cubes are contaminated by the first plurality of ice cubes.

In order to prevent the second plurality of ice cubes from being contaminated by the first plurality of ice cubes, whether the first plurality of ice cubes in the ice storage box are removed is judged after receiving the user's ice removal signal.

In an embodiment of the present invention, if the second plurality of ice cubes are not removed in a long time period, and a time period in which the second plurality of ice cubes are stored in the ice making box is greater than or equal to a preset threshold, the second plurality of ice cubes are judged as expired ice cubes.

In addition, the control method 101 further comprises:
S7: before making ice (before making the first plurality of ice cubes and making the second plurality of ice cubes), judging whether the automatic ice maker meets an ice-making condition; when a water level in a water tank in the automatic ice maker is greater than a minimum water level and an amount of stored water is greater than a minimum amount of stored water, it is judged that the ice-making condition is met and ice making is performed; otherwise, the ice making is not performed.

That is, step S2 and step S3 may further respectively comprise judging whether the automatic ice maker meets the ice-making condition, thereby ensuring that the first plurality of ice cubes and the second plurality of ice cubes are made smoothly.

As shown in FIG. 3, the automatic ice maker comprises a time-counting unit 102, a control unit 103 and a prompt unit 104 that are electrically connected with one another.

The time counting unit 102 is used to count the time period in which the automatic ice maker stops ice making. After the completion of a previous ice making process, the control unit 103 sends a time counting signal to the time counting unit 102. The time counting unit 102 is activated and starts to count the time period in which the automatic ice maker stops ice making, wherein when the counted time period in which the automatic ice maker stops ice making is greater than the preset threshold, the time period counted by the time counting unit 102 is automatically cleared, and the counting of the time period in which the automatic ice maker stops ice making is restarted. Therefore, from the completion of the previous ice making process to the start of next ice making process, the time period in which the automatic ice maker stops ice making counted by the time counting time 102 may be greater than or equal to the preset threshold at least once.

The control unit 103 controls a flip mechanism 107 to flip the ice-making box 108, so that the first plurality of ice cubes in the ice-making box 108 are discharged, and the prompt unit 104 is controlled to output a first-time prompt message. The first-time prompt message indicates that the first plurality of ice cubes are non-clean ice cubes, and prompts, via a voice, the user to remove the first plurality of ice cubes from the ice storage box.

In one embodiment, if the control unit 103, after receiving the ice removal signal, judges that the first plurality of ice cubes discharged in step S2 are not removed, the prompt unit 104 continues to output a text and/or voice prompt prompting to remove the first plurality of ice cubes and indicating the first plurality of ice cubes are non-clean ice cubes.

The prompt unit 104 may be a display touch panel integrated on a front door body of the refrigerator. The display touch panel comprises a text display interface and a loudspeaker which is used to output the voice corresponding to the text.

In a preferred embodiment, the control unit 103 is for example an integrated circuit board, and the time counting unit 102 is integrated on the integrated circuit board and electrically connected with the control unit 103. The control unit 103 and the prompt unit 104 are electrically connected via a circuit, so that prompt information output by the control unit 103 can be transmitted to the prompt unit 104 for output.

The automatic ice maker further comprises a detection unit 106, which detects whether there are expired ice cubes in the ice-making box 108 before the water filling pipe 105 of the automatic ice maker is controlled to fill water into the ice-making box 108. If there are expired ice cubes, the signal is output to the control unit 103. The control unit 103 controls the flip mechanism 107 to flip the ice-making box 108 to discharge the expired ice cubes, and then controls the water filling pipe 105 to fill water into the ice-making box 108 to form the first plurality of ice cubes.

In addition, the automatic ice maker further comprises a water tank and a liquid level sensor disposed in the water tank. The liquid level sensor detects a water level of the water tank and transmits the detected water level information of the water tank to the control unit 103. The control unit 103 calculates the amount of stored water in the water tank according to the water level information of the water tank. When the water level is greater than a minimum water level and the amount of stored water is greater than a minimum amount of stored water, it is judged that the ice-making condition is met; otherwise, the ice making is not performed.

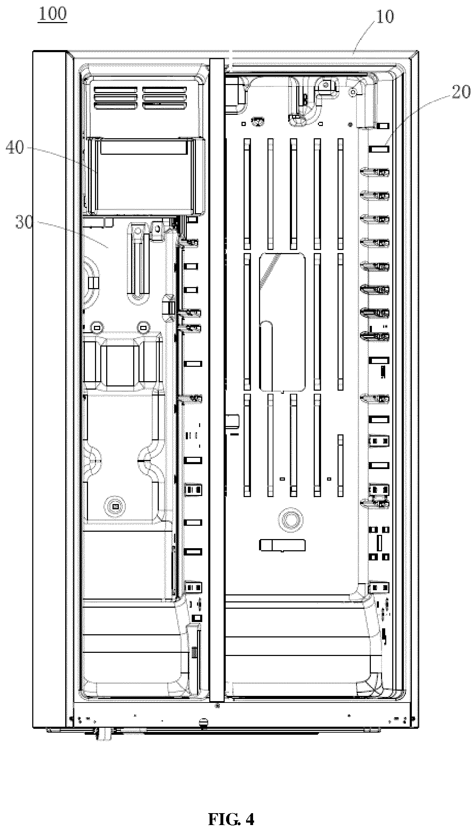

As shown in FIG. 4, the present invention further provides a refrigerator 100. The refrigerator 100 comprises a cabinet 10. The cabinet 10 comprises a refrigeration compartment, a door body (not shown) for opening and closing the refrigeration compartment, and an automatic ice maker disposed on the refrigeration compartment or door body. The refrigerator further comprises: a memory and a processor, the memory storing a computer program that may run on the processor, the processor, upon executing the computer program, implementing the steps of the method 101 for controlling the automatic ice maker.

The interior of the refrigeration compartment is divided into multiple compartments 20 and 30, and the automatic ice maker 40 is located in the compartment 30. The compartment 30 may be a refrigerating compartment or a freezing compartment. In addition, in other embodiments of the present invention, the automatic ice maker may also be disposed on the door body for opening and closing the refrigeration compartment.

When the processor of the refrigerator executes the corresponding computer program, the automatic ice maker 40 makes ice according to the steps of the above control method 101.

In the present embodiment, the refrigerator 100 is a double-door refrigerator, the refrigerating compartment 20 and the freezing compartment 30 are parallel and adjacent to each other in a left-right direction, and the automatic ice maker 40 is disposed in an upper portion of the freezing compartment 30.

To sum up, the present invention provides a control method adapted to control the ice making process of the automatic ice maker in the refrigerator. By calculating the time period in which the automatic ice maker stops ice making, the water is filled into the ice-making box at least once to make the first plurality of ice cubes (or non-clean ice cubes) at least once, and then the first plurality of ice cubes are discharged; then the water is filled into the ice-making box to make the second plurality of ice cubes (clean ice cubes); on the one hand, foreign matters such as dust existing in the water filling pipe and ice-making box due to no use of the automatic ice maker in a long time period are carried away by making non-clean ice cubes at least once; on the other hand, this ensures that the user can obtain clean ice cubes whenever removing ice cubes.

In addition, the present invention further provides an automatic ice maker and a refrigerator based on the above control method.

## Claims

1. A method (101) for controlling an automatic ice maker (40), wherein the method comprises:
calculating a time period in which the automatic ice maker (40) stops ice making;
if the time period in which the automatic ice maker (40) stops ice making exceeds a preset threshold, filling water into an ice-making box of the automatic ice maker (40) at least once and then making a first plurality of ice cubes, and discharging the first plurality of ice cubes out of the ice-making box;
filling water into the ice-making box to make a second plurality of ice cubes,
**characterized in that**
the step of filling water into an ice-making box of the automatic ice maker at least once and then making a first plurality of ice cubes further comprises:
judging whether there are expired ice cubes in the ice-making box;
if there are the expired ice cubes, discharging the expired ice cubes out of the ice-making box;
filling water into the ice-making box and then making the first plurality of ice cubes,
and
the step of discharging the first plurality of ice cubes out of the ice-making box comprises:
discharging the first plurality of ice cubes out of the ice-making box, and outputting a prompt message prompting that the first plurality of ice cubes are non-clean ice cubes.

2. The controlling method (101) according to claim 1, wherein the controlling method further comprises:
after receiving an ice removal signal, judging whether the first plurality of ice cubes are removed;
if the first plurality of ice cubes are removed, discharging the second plurality of ice cubes out of the ice-making box.

3. The controlling method (101) according to claim 2, wherein the controlling method further comprises:
if the first plurality of ice cubes are not removed, outputting a prompt message prompting the user to remove the first plurality of ice cubes.

4. The controlling method (101) according to claim 1, wherein the controlling method further comprises:
before making ice, detecting whether the automatic ice maker (40) meets an ice-making condition;
when a water level in a water tank in the automatic ice maker (40) is greater than a minimum water level and an amount of stored water is greater than a minimum amount of stored water, it is judged that the ice-making condition is met and ice making is performed;
otherwise, the ice making is not performed.

5. An automatic ice maker (40), comprising an ice-making box (108), a water filling pipe (105) and a flip structure (107), wherein the automatic ice maker (40) **characterised in that**, further comprises:
a time counting unit (102) for calculating a time period in which the automatic ice maker (40) stops ice making;
a control unit (103) configured to control the automatic ice maker (40) to make ice by the controlling method according to any of claims 1-4; and
a prompting unit (104) for outputting a prompt message output by the control unit.

6. The automatic ice maker (40) according to claim 5, wherein the automatic ice maker (40) further comprises a water tank and a liquid level sensor disposed in the water tank, and the liquid level sensor detects a water level of the water tank.

7. A refrigerator (100), comprising a refrigeration compartment (10), a door body for opening and closing the refrigeration compartment (10), and an automatic ice maker (40) according to claim 5
disposed on the refrigeration compartment (10) or door body, **characterised in that**, the refrigerator (100) further comprises:
a memory and a processor, the memory storing a computer program that may run on the processor, wherein the processor, upon executing the computer program, implements the steps of the method (101) for controlling the automatic ice maker (40) according to any of claims 1-4.

8. The refrigerator according to claim 7, wherein the refrigerator (100) is further provided with a touch display panel, and the touch display panel comprises a text display interface and a loudspeaker.

## Patentansprüche

1. Verfahren (101) zum Steuern eines automatischen Eisbereiters (40), wobei das Verfahren umfasst:
Berechnen eines Zeitraums, in dem der automatische Eisbereiter (40) die Eisherstellung stoppt;
wenn der Zeitraum, in dem der automatische Eisbereiter (40) die Eisherstellung stoppt, einen voreingestellten Schwellenwert überschreitet, mindestens einmaliges Einfüllen von Wasser in eine Eisherstellungsbox des automatischen Eisbereiters (40) und anschließendes Herstellen einer ersten Mehrzahl von Eiswürfeln und Ausgeben der ersten Mehrzahl von Eiswürfeln aus der Eisherstellungsbox;
Einfüllen von Wasser in die Eisherstellungsbox, um eine zweite Mehrzahl von Eiswürfeln herzustellen, **dadurch gekennzeichnet, dass**
der Schritt mindestens einmaliges Einfüllen von Wasser in eine Eisherstellungsbox des automatischen Eisbereiters und anschließendes Herstellen einer ersten Mehrzahl von Eiswürfeln ferner umfasst:
Beurteilen, ob abgelaufene Eiswürfel in der Eisherstellungsbox vorhanden sind;
wenn die abgelaufenen Eiswürfel vorhanden sind, Ausgeben der abgelaufenen Eiswürfel aus der Eisherstellungsbox;
Einfüllen von Wasser in die Eisherstellungsbox und dann Herstellen der ersten Mehrzahl von Eiswürfeln,
und
der Schritt Ausgeben der ersten Mehrzahl von Eiswürfeln aus der Eisherstellungsbox umfasst:
Ausgeben der ersten Mehrzahl von Eiswürfeln aus der Eisherstellungsbox und Ausgeben einer Aufforderungsnachricht, die auffordert, dass die erste Mehrzahl von Eiswürfeln nicht saubere Eiswürfel sind.

2. Steuerverfahren (101) nach Anspruch 1, wobei das Steuerverfahren ferner umfasst:
nach Empfangen eines Eisentfernungssignals, Beurteilen, ob die erste Mehrzahl von Eiswürfeln entfernt ist;
wenn die erste Mehrzahl von Eiswürfeln entfernt ist, Ausgeben der zweiten Mehrzahl von Eiswürfeln aus der Eisherstellungsbox.

3. Steuerverfahren (101) nach Anspruch 2, wobei das Steuerverfahren ferner umfasst:
wenn die erste Mehrzahl von Eiswürfeln nicht entfernt ist, Ausgeben einer Aufforderungsnachricht, die den Benutzer auffordert, die erste Mehrzahl von Eiswürfeln zu entfernen.

4. Steuerverfahren (101) nach Anspruch 1, wobei das Steuerverfahren ferner umfasst:
vor dem Herstellen von Eis, Erfassen, ob der automatische Eisbereiter (40) eine Eisherstellungsbedingung erfüllt;
wenn ein Wasserstand in einem Wassertank in dem automatischen Eisbereiter (40) größer als ein Mindestwasserstand ist und eine Menge an gespeichertem Wasser größer als eine Mindestmenge an gespeichertem Wasser ist, Beurteilen, dass die Eisherstellungsbedingung erfüllt ist und Eisherstellung durchgeführt wird;
andernfalls wird die Eisherstellung nicht durchgeführt.

5. Automatischer Eisbereiter (40), mit einer Eisherstellungsbox (108), einem Wassereinfüllrohr (105) und einer Klappstruktur (107), wobei der automatische Eisbereiter (40) **dadurch gekennzeichnet ist, dass** dieser ferner aufweist:
eine Zeitzähleinheit (102) zum Berechnen eines Zeitraums, in dem der automatische Eisbereiter (40) die Eisherstellung stoppt;
eine Steuereinheit (103), die eingerichtet ist, den automatischen Eisbereiter (40) zu steuern, um durch das Steuerverfahren nach einem der Ansprüche 1 bis 4 Eis herzustellen, und
eine Aufforderungseinheit (104) zum Ausgeben einer Aufforderungsnachricht, die durch die Steuereinheit ausgegeben wird.

6. Automatischer Eisbereiter (40) nach Anspruch 5, wobei der automatische Eisbereiter (40) ferner einen Wassertank und einen Flüssigkeitsstandsensor aufweist, der in dem Wassertank angeordnet ist, und der Flüssigkeitsstandsensor einen Wasserstand des Wassertanks erfasst.

7. Kühlschrank (100), mit einem Kühlfach (10), einem Türkörper zum Öffnen und Schließen des Kühlfachs (10) und einem automatischen Eisbereiter (40) nach Anspruch 5,
der an dem Kühlfach (10) oder dem Türkörper angeordnet ist, **dadurch gekennzeichnet, dass** der Kühlschrank (100) ferner aufweist:
einen Speicher und einen Prozessor, wobei der Speicher ein Computerprogramm speichert, das auf dem Prozessor laufen kann, wobei der Prozessor bei Ausführung des Computerprogramms die Schritte des Verfahrens (101) zum Steuern des automatischen Eisbereiters (40) nach einem der Ansprüche 1 bis 4 implementiert.

8. Kühlschrank nach Anspruch 7, wobei der Kühlschrank (100) ferner mit einem Touch-Display-Panel versehen ist und das Touch-Display-Panel eine Textanzeigeschnittstelle und einen Lautsprecher aufweist.

## Revendications

1. Procédé (101) de commande d'une machine à glaçons automatique (40), dans lequel le procédé comprend :
le calcul d'un laps de temps au cours duquel la machine à glaçons automatique (40) cesse de produire des glaçons ;
si le laps de temps au cours duquel la machine à glaçons automatique (40) cesse de fabriquer des glaçons dépasse un seuil prédéfini, l'introduction d'eau dans un bac à glaçons de la machine à glaçons automatique (40) au moins une fois, puis la fabrication d'une première pluralité de glaçons et l'évacuation de la première pluralité de glaçons hors du bac à glaçons ;
l'introduction d'eau dans le bac à glaçons pour produire une seconde pluralité de glaçons,
**caractérisé en ce que**
l'étape d'introduction d'eau au moins une fois dans le bac à glaçons de la machine à glaçons automatique, puis de fabrication d'une première pluralité de glaçons, comprend en outre :
la détermination pour établir si le bac à glaçons contient des glaçons trop vieux ;
en cas de glaçons trop vieux, l'évacuation des glaçons trop vieux hors de la machine à glaçons ;
l'introduction d'eau dans le bac à glaçons puis la fabrication de la première pluralité de glaçons,
et
l'étape d'évacuation de la première pluralité de glaçons hors du bac à glaçons comprend :
l'évacuation de la première pluralité de glaçons hors du bac à glaçons et l'envoyésion d'un message d'invite indiquant que la première pluralité de glaçons sont des glaçons impurs.

2. Procédé de commande (101) selon la revendication 1, dans lequel le procédé de commande comprend en outre :
après avoir reçu un signal de retrait de glaçons, la détermination pour établir si la première pluralité de glaçons sont retirés ;
si la première pluralité de glaçons sont retirés, l'évacuation de la seconde pluralité de glaçons hors du bac à glaçons.

3. Procédé de commande (101) selon la revendication 2, dans lequel le procédé de commande comprend en outre :
si la première pluralité de glaçons ne sont pas retirés, l'envoi d'un message d'invite invitant l'utilisateur à retirer la première pluralité de glaçons.

4. Procédé de commande (101) selon la revendication 1, dans lequel le procédé de commande comprend en outre :
avant de fabriquer des glaçons, la détection pour établir si la machine à glaçons automatique (40) répond à une condition de fabrication de glaçons ;
lorsque le niveau d'eau dans un réservoir d'eau de la machine à glaçons automatique (40) est supérieur à un niveau d'eau minimal et que la quantité d'eau stockée est supérieure à une quantité minimale d'eau stockée, il est déterminé que la condition de fabrication de glaçons est remplie et la fabrication de glaçons est effectuée ;
dans le cas contraire, la fabrication de glaçons n'est pas effectuée.

5. Machine à glaçons automatique (40), comprenant un bac à glaçons (108), un tuyau d'introduction d'eau (105) et une structure basculante (107), dans laquelle la machine à glaçons automatique (40) est **caractérisée en ce qu'**elle comprend en outre :
une unité de décompte du temps (102) pour calculer un laps de temps au cours duquel la machine à glaçons automatique (40) arrête de fabriquer des glaçons ;
une unité de commande (103) configurée pour commander la machine à glaçons automatique (40) afin de fabriquer des glaçons selon le procédé de commande, conformément à l'une quelconque des revendications 1-4 ; et
une unité d'invite (104) pour envoyer un message d'invite envoyé par l'unité de commande.

6. Machine à glaçons automatique (40) selon la revendication 5, dans laquelle la machine à glaçons automatique (40) comprend en outre un réservoir d'eau et un capteur de niveau de liquide disposé dans le réservoir d'eau, et le capteur de niveau de liquide détecte le niveau d'eau du réservoir d'eau.

7. Réfrigérateur (100), comprenant un compartiment de réfrigération (10), un corps de porte pour ouvrir et fermer le compartiment de réfrigération (10), et une machine à glaçons automatique (40) selon la revendication 5 disposée sur le compartiment de réfrigération (10) ou le corps de porte,
**caractérisé en ce que** le réfrigérateur (100) comprend en outre :
une mémoire et un processeur, la mémoire stockant un programme informatique pouvant s'exécuter sur le processeur, dans lequel le processeur, lors de l'exécution du programme informatique, met en œuvre les étapes du procédé (101) de commande de la machine à glaçons automatique (40) selon l'une quelconque des revendications 1-4.

8. Réfrigérateur selon la revendication 7, dans lequel le réfrigérateur (100) est en outre doté d'un panneau d'affichage tactile, et le panneau d'affichage tactile comprend une interface d'affichage de texte et un haut-parleur.
